# EUROPEAN PATENT SPECIFICATION

(11) **EP 3 264 400 B1**
(45) Date of publication and mention of the grant of the patent: **20.05.2020**
(21) Application number: 16754969.0
(22) Date of filing: 19.02.2016
(51) Int. Cl.: G09F 9/00, G02F 1/1333, H04N 5/64

(54) **BACK PLATE FOR USE IN A DISPLAY DEVICE AND DISPLAY DEVICE COMPRISING SUCH A BACK PLATE**
RÜCKPLATTE FÜR VERWENDUNG IN EINER ANZEIGEVORRICHTUNG UND ANZEIGEVORRICHTUNG MIT EINER SOLCHEN RÜCKPLATTE
PLAQUE ARRIÈRE UTILISABLE DANS UN DISPOSITIF D'AFFICHAGE ET DISPOSITIF D'AFFICHAGE COMPRENANT UNE TELLE PLAQUE ARRIÈRE

(30) Priority: 23.02.2015 JP 2015033043
(43) Date of publication of application: 03.01.2018
(73) Proprietor: Panasonic Intellectual Property Management Co., Ltd., Osaka-shi, Osaka 540-6207 (JP)
(72) Inventor: TANAKA, Hiroya, Osaka 540-6207 (JP); KAWAGUCHI, Satoshi, Osaka 540-6207 (JP); MICHIYASU, Takayuki, Osaka 540-6207 (JP)
(74) Representative: Vigand, Philippe
(86) International application number: PCT/JP2016/000886
(87) International publication number: WO 2016/136218

(56) References cited:
- WO-A1-2010/007921
- WO-A1-2014/002688
- WO-A1-2014/125657
- JP-A- 2004 021 104
- JP-A- 2010 057 030
- JP-A- 2014 021 224
- JP-A- 2014 153 672
- JP-A- 2014 155 060
- US-A1- 2014 125 913

## Description

### TECHNICAL FIELD

The present disclosure relates to a display device that displays an image such as a still image or a moving image, and a back plate used in the display device.

### BACKGROUND ART

Patent Literature 1 discloses a display device provided with a stand. The stand supports the display device from bottom. The stand has a plate-shaped pedestal, and a supporting column extending upward from the pedestal, for example. An upper end part of the supporting column is fastened, with a screw or the like, to a back plate that holds a display panel on the back surface of the display panel.

### Citation List

### Patent Literature

PTL 1: Unexamined Japanese Patent Publication No. 2007-156176
PTL 2: International patent application WO 2014/125657 A1. This document discloses an electronic device provided with a display panel; a back cover that comprises a flat plate section and that covers the rear of the display panel; a pair of first wall sections that are integrally provided with the back cover and that extend in a direction leading away from the display panel; a second wall section that spans the area between the pair of first wall sections; a first protruding section that extends in a direction that intersects the lengthwise direction of the back cover at the flat plate section; a pair of third wall sections that are adjacent to the first protruding section, that are integrally provided with the back cover, and that extend in a direction that approaches the display panel; a fourth wall section that spans the area between the pair of third wall section; and a second protruding section that extends in a direction that intersects the lengthwise direction of the back cover at the flat plate section.
PTL 3: United States patent application US 2014/125913 A1. This document discloses a curved liquid crystal display device comprising a liquid crystal display panel, a backlight unit, a bottom cover and a reinforcement frame. The liquid crystal display panel includes a thin film transistor substrate and a color filter substrate. The backlight unit applies light to the liquid crystal display panel. The bottom cover supports the backlight unit and has a flat shape. The reinforcement frame has a predetermined curvature and is attached to the bottom cover. The flat bottom cover is mounted on the reinforcement frame such that the flat bottom cover has the predetermined curvature of the reinforcement frame.

### SUMMARY

Display devices are getting larger. Also, a size of a mounting section for mounting a holding member such as a supporting column has tended to increase in order to suppress an inclination of the display device in the front rear direction, vibration in a width direction, and the like. On the other hand, when the entire thickness of the display device increases due to the increase in size of the mounting section, it is difficult to make the display device thinner.

The present disclosure provides a display device that can be held by a holding member in a stable state while design of the display device is being improved, and a back plate used in the display device.

The display device according to the present disclosure includes a display panel that displays an image and a back plate that holds the display panel. As recited in appended claim 1, the back plate has a plurality of mounting sections, a plurality of vertically extending bulging sections, and a laterally extending bulging section. The plurality of mounting sections are disposed on a plurality of positions on a lower edge part of the back plate, and are arranged for mounting a reciprocal plurality of holding members, that hold the display device. The vertically extending bulging sections bulge out from a reference surface of the back plate, and each extend from the proximity of the upper ends of the mounting sections to the upper edge part of the back plate. The laterally extending bulging section bulges out from the reference surface, extends along the upper edge part of the back plate, and has a length larger than a distance between adjacent vertically extending bulging sections.

The display device of the present disclosure can be held by the holding member in a stable state while increase in thickness is suppressed, even if the display device has a large size.

### BRIEF DESCRIPTION OF DRAWINGS

FIG. 1 is a perspective view schematically illustrating one example of an external appearance of a display device according to a first exemplary embodiment.
FIG. 2 is an exploded perspective view schematically illustrating one example of a structure of the display device according to the first exemplary embodiment.
FIG. 3 is a perspective view schematically illustrating one example of a back part of a back plate according to the first exemplary embodiment.
FIG. 4 is an enlarged plan view illustrating a vicinity of a mounting section in the first exemplary embodiment.
FIG. 5 is an enlarged perspective view illustrating the vicinity of the mounting section to which a holding member is mounted in the first exemplary embodiment.

### DESCRIPTION OF EMBODIMENTS

Exemplary embodiments below merely describe one example of a display device according to the present disclosure. Therefore, the present disclosure is not limited only to the exemplary embodiments described below.

In addition, the drawings are conceptual sketches to which emphasis, omission, and proportional adjustment are appropriately made to illustrate the present disclosure, and may not reflect actual shapes, positional relations, and proportions.

Throughout the drawings, substantially identical components will be denoted by the same reference marks.

Hereinafter, exemplary embodiments will be described in detail with reference to the drawings as needed. However, parts of the description that are more detailed than necessary will be sometimes omitted. For example, detailed description for matters which have already been well known and redundant description for substantially identical configurations will be sometimes omitted. This is to prevent the description below from becoming unnecessarily redundant to facilitate understanding of a person skilled in the art.

Note that the accompanying drawings and the following description are provided in order for a person of ordinary skill in the art to sufficiently understand the present disclosure, and they are not intended to limit the subject matter set forth in the claims.

### FIRST EXEMPLARY EMBODIMENT

### [1-1. Outline of configuration of display device]

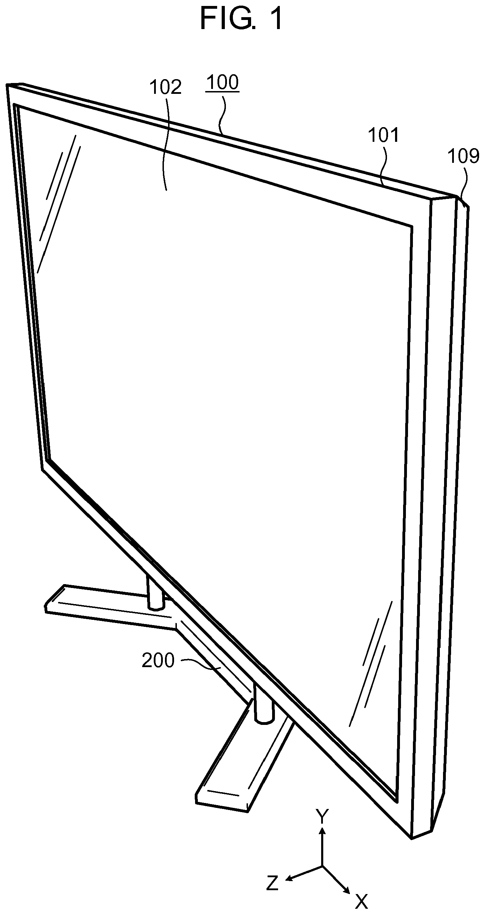

FIG. 1 is a perspective view schematically illustrating one example of an external appearance of display device 100 according to the first exemplary embodiment.

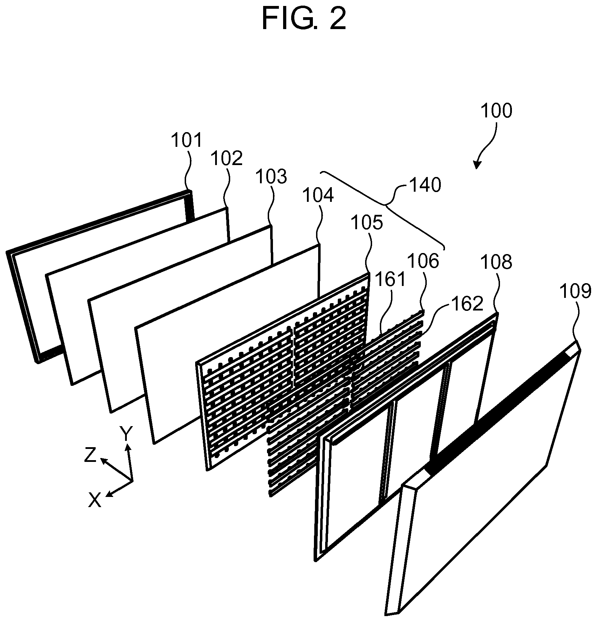

FIG. 2 is an exploded perspective view schematically illustrating one example of a structure of display device 100 according to the first exemplary embodiment.

Noted that these drawings schematically illustrate an outline configuration of display device 100 and the details are omitted.

Note that XYZ axes are used below for the description as necessary. In this exemplary embodiment, a direction parallel (substantially parallel) to a longer side direction of display device 100 is defined as an X axis direction, a direction parallel (substantially parallel) to a shorter side direction of display device 100 is defined as an Y axis direction, and a direction orthogonal to both the X axis and the Y axis is defined as a Z axis direction, for the sake of convenience. In addition, the vertical direction with respect to the XZ plane, that is, the Y-axis direction, is the direction of gravitational force. Under a normal use condition, display device 100 is supposed to be installed on an installation surface parallel (substantially parallel) to the XZ plane. Further, a side of display device 100 that faces a user (not illustrated) viewing display device 100 is defined as a "front side" or a "front", and a side opposite to the front side is defined as a "back side" or a "back". A side relatively distant from the installation surface in the Y-axis direction is defined as "upper (or top) side", and a side relatively close to the installation surface in the Y-axis direction is defined as "lower (or bottom) side". Moreover, a direction parallel (substantially parallel) to the shorter side direction of display device 100 is defined as "vertical", and a direction parallel (substantially parallel) to the longer side direction of display device 100 is defined as "widthwise (or lateral)". Note that these directions are given as relative directions for descriptive purpose but not absolute ones.

Display device 100 includes frame 101, front member 102, display panel 103, light-emitting unit 140, back plate 108, and back cover 109.

Display device 100 described in this exemplary embodiment is a television that outputs images or sounds obtained from received broadcast waves, etc., and contains a circuit board (not illustrated). Noted that the configuration as a television is substantially identical to a commonly known configuration, so that the description thereof will be omitted. In addition, display device 100 is mounted to holding members 200. Holding member 200 encompasses members called a leg or a base (pedestal, stand), a bracket for mounting display device 100 to a wall or a ceiling, and the like.

Frame 101, front member 102, and back cover 109 are components that cover display panel 103, light-emitting unit 140, and the like. Frame 101 is a member that protects outer perimeters of display panel 103, and the like. Front member 102 is a transparent member that covers a front surface of display panel 103. Back cover 109 is a member that protects back surfaces of display panel 103 and the like.

Display panel 103 is a device that displays an image based on an input video signal. The image includes a still image, a moving image, and the like, and also includes characters, symbols, and the like. Display panel 103 described in this exemplary embodiment is a liquid crystal display panel. In addition, a thickness of display panel 103 is about 1 mm to 3 mm, for example.

Note that the type of display panel 103 is not particularly limited in the present disclosure. Display panel 103 may include a display panel that does not need light-emitting unit 140 on the back surface side of display panel 103.

### [1-2. Light-emitting unit]

Light-emitting unit 140 is a component for radiating light with substantially uniform luminance to the back surface of display panel 103, and generally called a "backlight". Light-emitting unit 140 includes diffusion plate 104, reflection sheet 105, and light-emitting module 106.

Light-emitting module 106 is configured such that several of a plurality of light-emitting sources 161 included in display device 100 are mounted to wiring board 162. Light-emitting module 106 is provided so that light-emitting sources 161 can be easily disposed on back plate 108. Light-emitting sources 161 can be arranged in a matrix along display panel 103 by mounting light-emitting module 106 to back plate 108.

Note that a recessed part (not illustrated) for mounting light-emitting module 106 is formed on back plate 108.

Wiring board 162 is provided with a connector. On wiring board 162, electric power supplied from an electric line connected to the connector is supplied to light-emitting sources 161 mounted to wiring board 162. Thus, light-emitting sources 161 mounted on wiring board 162 are turned on.

Light-emitting sources 161 are arranged in a matrix along display panel 103 (along the X axis and the Y axis). Light-emitting sources 161 are components that radiate light toward display panel 103 from the back surface side of display panel 103. Although the type of light-emitting sources 161 is not particularly limited in the present disclosure, examples of light-emitting sources 161 include a white LED which is formed by combining a blue light-emitting diode and a fluorescence material emitting yellow and can radiate white light.

Diffusion plate 104 is a member that diffuses light radiated from the plurality of light-emitting sources 161. For example, diffusion plate 104 diffuses incident light in substantially all directions to reduce viewing angle dependency in luminance of radiated light, thereby making the luminance of the radiated light substantially uniform. As one specific example, diffusion plate 104 is a plate-shaped transparent member having fine irregularities on both surfaces or only on one surface. In addition, microparticles having high reflectivity may be dispersed in diffusion plate 104. Further, diffusion plate 104 may be formed by laminating a plurality of films with fine irregularities in layers.

Reflection sheet 105 is a member that reflects light radiated from light-emitting sources 161 to display panel 103. Reflection sheet 105 is provided with insertion holes into which light-emitting sources 161 are inserted. Note that the diameter of each insertion hole may be set to be larger than the outer shape of each of light-emitting sources 161 so that light-emitting source 161 can be easily inserted into the insertion hole.

In the present disclosure, the material of reflection sheet 105 is not particularly limited. For example, a white sheet-shaped member made of synthetic resin such as polyethylene terephthalate (PET) having excellent light reflectivity can be used as reflection sheet 105. In addition, reflection sheet 105 has flexibility (elasticity) that enables swelling-out (deformation) due to partial pushing-out by protrusion (not illustrated).

### [1-3. Back plate]

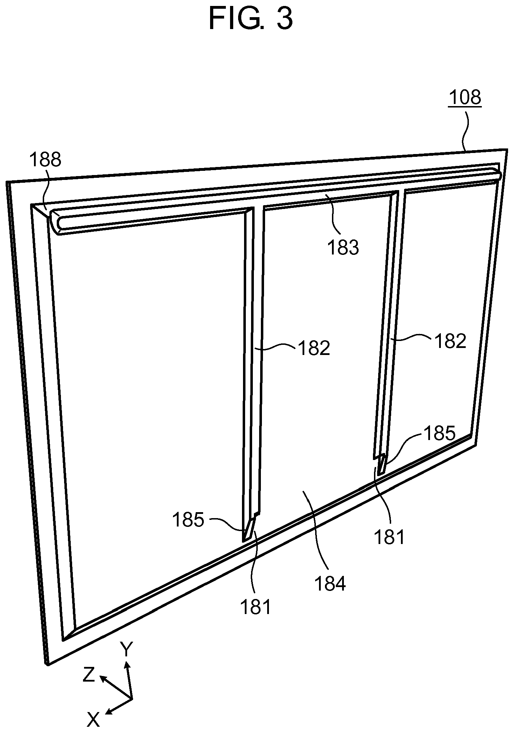

FIG. 3 is a perspective view schematically illustrating one example of a back part of back plate 108 according to the first exemplary embodiment.

Back plate 108 is a plate-shaped member that holds display panel 103, and is disposed on the back surface (a surface in the negative direction of the Z axis) of display panel 103 as illustrated in FIG. 2. As illustrated in FIG. 3, back plate 108 has mounting sections 181, vertically extending bulging sections 182, and laterally extending bulging section 183. Notably, back plate 108 is also provided with a bulging section (recessed section) for holding light-emitting module 106, bosses for fastening light-emitting module 106 and a circuit board with screws, but they are not illustrated.

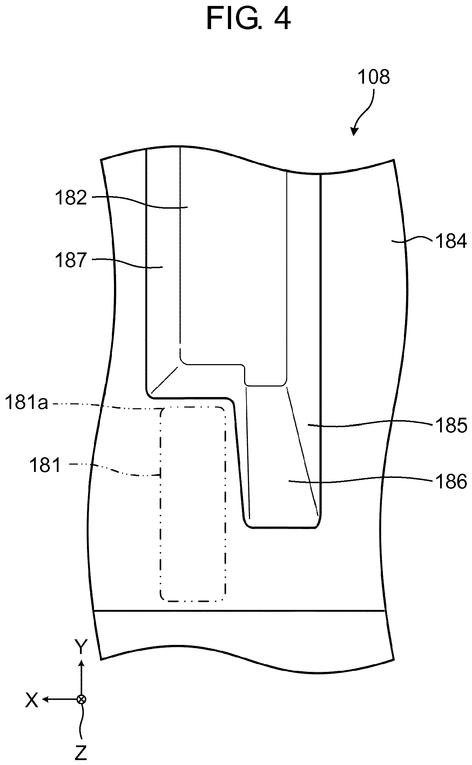

FIG. 4 is an enlarged plan view illustrating the vicinity of mounting section 181 in the first exemplary embodiment.

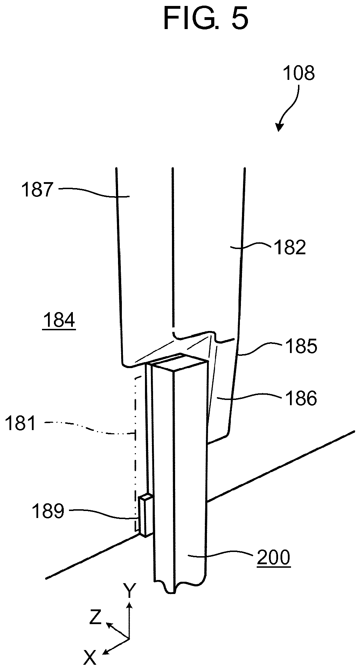

FIG. 5 is an enlarged perspective view illustrating the vicinity of mounting section 181 to which holding member 200 is mounted in the first exemplary embodiment.

Mounting sections 181 are formed on an edge part of a lower end of back plate 108, and are a portion of back plate 108. Each mounting section 181 is formed such that holding member 200 for holding display device 100 can be mounted to thereto.

Noted that mounting sections 181 may be disposed on positions where holding members 200 can hold back plate 108 in a balanced and stable manner. Specifically, the above-mentioned edge part of the lower end of back plate 108 means a range where each holding member 200 mounted to each of mounting sections 181 can hold back plate 108 in a balanced and stable manner.

In the present exemplary embodiment, attachment fitting 189 for mounting holding member 200 is fixed to mounting sections 181 respectively.

Attachment fitting 189 is a member that can improve the structural strength of mounting section 181 and can facilitate and ensure the mounting of holding member 200 to back plate 108.

As illustrated in FIGS. 3 and 4, each of vertically extending bulging sections 182 is a portion of back plate 108, and is configured to have a width (a length in the longer side direction (the X-axis direction) of back plate 108) larger than the width of mounting section 181, bulge out backward from reference surface 184, and extend from the vicinity of upper end part 181a of mounting section 181 to an edge part of an upper end of back plate 108. Note that reference surface 184 means a surface, on the back surface of back plate 108, which is flush with mounting sections 181 to each of which holding member 200 is mounted.

Noted that the lower end and the upper end of vertically extending bulging section 182 may be set within a range by which sufficient rigidity of back plate 108 can be obtained. Specifically, the vicinity of upper end part 181a of mounting section 181 means a region from a position where the lower end of vertically extending bulging section 182 is in contact with upper end part 181a of mounting section 181 to a position where the lower end of vertically extending bulging section 182 is apart from upper end part 181a of mounting section 181 by a distance by which the rigidity of back plate 108 is not impaired. In addition, the edge part of the upper end of back plate 108 means a region where sufficient rigidity of back plate 108 can be obtained by vertically extending bulging sections 182.

Note that, in the present exemplary embodiment, the bulging section (including vertically extending bulging sections 182 and laterally extending bulging section 183) means a part formed such that a portion of a thin plate-shaped member bulges out and projects to one side. Therefore, the bulging section projects as viewed from one surface of the plate-shaped member (as viewed from the back surface side of back plate 108 in the example in FIG. 3), while it is recessed as viewed from the other surface (as viewed from the front surface side of back plate 108 in the example in FIG. 3).

In this exemplary embodiment, mounting sections 181 and vertically extending bulging sections 182 are provided to positions on back plate 108 for dividing back plate 108 into substantially three equal parts or almost three equal parts in the widthwise (lateral) direction (the longer side direction (the X-axis direction) of back plate 108), as illustrated in FIG. 3. Thus, holding members 200 can hold back plate 108 in a balanced manner with the number of mounting sections 181 and vertically extending bulging sections 182 formed on back plate 108 being reduced.

In addition, vertically extending bulging sections 182 are not disposed on edge parts of ends in the widthwise (lateral) direction (the longer side direction (the X-axis direction) of back plate 108) of back plate 108. This configuration can give, to a user, the impression of the thinness of display device 100 as viewed from a side of display device 100, and thus design of display device 100 can be improved

In addition, as illustrated in FIG. 3, vertically extending bulging sections 182 extend along a top-bottom direction (the shorter side direction (Y-axis direction) of back plate 108) of back plate 108. Thus, the rigidity of display device 100 in the front-back direction (the thickness direction (Z-axis direction) of back plate 108) can be improved.

Noted that a part of vertically extending bulging section 182 in the top-bottom direction may be narrower than mounting section 181 to ensure a region where a circuit board and the like are disposed. In other words, at least a part of vertically extending bulging section 182 may be wider than mounting section 181.

In addition, back plate 108 has reinforcement bulging sections 185 as illustrated in FIG. 4. Each of reinforcement bulging sections 185 is provided on a side of mounting section 181 and extends from the lower end of vertically extending bulging section 182 to substantially an intermediate position of mounting section 181 beyond upper end part 181a of mounting section 181.

Like vertically extending bulging sections 182, reinforcement bulging sections 185 are formed to bulge out backward from reference surface 184. Due to the configuration in which each reinforcement bulging section 185 is disposed on a side of each of mounting sections 181, the mechanical strength on mounting sections 181, in the front-back direction (the Z-axis direction), can be increased in the state in which each holding member 200 is mounted to each of mounting sections 181.

In the present exemplary embodiment, each reinforcement bulging section 185 is formed continuously with each of vertically extending bulging sections 182 in the top-bottom direction (the Y-axis direction). In addition, as illustrated in FIG. 4, reinforcement bulging section 185 has an inclined section 186 of which bulging height is gradually decreased toward the bottom (in the negative direction of the Y axis) from the bulging surface of vertically extending bulging section 182. Noted that the bulging height means a length from reference surface 184 to the bulging surface in the front-back direction (the Z-axis direction) of back plate 108.

Note that the inclination angle of inclined section 186 is set to be less steep than an inclination angle of tapered section 187 of vertically extending bulging section 182. Further, a width (the length in the X-axis direction) of reinforcement bulging section 185 is set to be a width as substantially same as a width obtained by subtracting the width of mounting section 181 (the length in the X-axis direction) from the width of vertically extending bulging section 182 (the length in the X-axis direction).

This configuration enables the manufacture of reinforcement bulging sections 185 to be facilitated with the mechanical strength on mounting sections 181 being sufficiently ensured. In addition, the provision of inclined section 186 can improve the design at the lower end part of display device 100.

As illustrated in FIG. 3, laterally extending bulging section 183 is a portion of back plate 108 that extends along an edge of the upper end (in the X-axis direction) of back plate 108 and is formed into a shape bulging out backward from reference surface 184. The length (a size in the X-axis direction) of laterally extending bulging section 183 is set to be longer than the distance between vertically extending bulging sections 182 provided on two positions of back plate 108 in the X-axis direction.

In this exemplary embodiment, laterally extending bulging section 183 extends throughout almost the entire lateral width (the width of back plate 108 in the longer side direction (the X-axis direction)) of rectangular reference surface 184, and is formed continuously with vertically extending bulging sections 182. That is, laterally extending bulging section 183 and vertically extending bulging sections 182 are connected to each other into a T shape at ends of vertically extending bulging sections 182. In addition, the bulging height of laterally extending bulging section 183 (the length from reference surface 184 to the bulging surface in the Z-axis direction) is set to be almost equal to the bulging height of vertically extending bulging sections 182 so that the bulging surface of laterally extending bulging section 183 is substantially flush with the bulging surfaces of vertically extending bulging sections 182. Further, the width of laterally extending bulging section 183 (the size in the Y-axis direction) is set to be narrower than the width (the size in the X-axis direction) of vertically extending bulging sections 182.

Thus, in display device 100, the structural strength due to vertically extending bulging sections 182 can be extended to the edge parts of ends of back plate 108 in the widthwise (lateral) direction (the X-axis direction), so that the strength in the rotation direction of display device 100 around the top-bottom direction (the strength with respect to deflection in the Z-axis direction) can be increased.

Further, as illustrated in FIG. 3, laterally extending bulging section 183 is formed across reference surface 184 from near an intermediate position of inclined frame section 188 disposed on the peripheral edge of back plate 108. Note that inclined frame section 188 is a portion of back plate 108 and is configured to be closer to display panel 103 toward the peripheral end edge of back plate 108. In other words, inclined frame section 188 is a portion of back plate 108 and is configured such that an opening area becomes larger according as inclined frame section 188 is near to display panel 103.

This configuration enables the rigidity of back plate 108 to be increased.

In the present exemplary embodiment, vertically extending bulging sections 182, laterally extending bulging section 183, and reinforcement bulging sections 185 are formed integrally with back plate 108, and formed simultaneously with back plate 108 during the manufacture of back plate 108 by performing plastic deformation working on a metal plate. One example of a method for manufacturing back plate 108 will be described. For example, a metal plate is subjected to press working using a die so that vertically extending bulging sections 182, laterally extending bulging section 183, reinforcement bulging sections 185, inclined frame section 188, etc. can be formed.

Note that back plate 108 has also bulging sections (not illustrated) other than vertically extending bulging sections 182 and laterally extending bulging section 183. However, vertically extending bulging sections 182 and laterally extending bulging section 183 are formed to have a bulging height larger than a height of other bulging sections. [1-4. Effects and the like]

As described above, in the present exemplary embodiment, the display device includes a display panel that displays an image and a back plate that holds the display panel. The back plate has mounting sections, a plurality of vertically extending bulging sections, and a laterally extending bulging section. The mounting sections are disposed on a plurality of positions on an edge part of one end of the back plate, and holding members that hold the display device are mounted to the mounting sections respectively. The vertically extending bulging sections bulge out from a reference surface of the back plate, and extend from near one ends of the mounting sections to an edge part of the other end of the back plate on an opposite side from the one end of the back plate. The laterally extending bulging section bulges out from the reference surface, extends along an edge of the other end of the back plate, and has a length larger than a distance between the vertically extending bulging sections adjacent to each other.

Note that display device 100 is one example of the display device. Display panel 103 is one example of the display panel. Back plate 108 is one example of the back plate. Mounting section 181 is one example of the mounting section. Vertically extending bulging section 182 is one example of the vertically extending bulging section. Laterally extending bulging section 183 is one example of the laterally extending bulging section. Holding member 200 is one example of the holding member. The lower end of back plate 108 is one example of one end of the back plate. The upper end of back plate 108 is one example of the other end of the back plate. Reference surface 184 is one example of the reference surface of the back plate. Upper end part 181a of mounting section 181 is one example of one end of the mounting section.

According to this configuration, in display device 100 described exemplary in the first exemplary embodiment, for example, design can be improved by decreasing the thickness of display device 100. In addition, the entire rigidity of a display device set in which holding members 200 are mounted to display device 100 can be increased. Further, in display device 100, the mechanical strength for obtaining high rigidity can be implemented by the structure of vertically extending bulging sections 182 and laterally extending bulging section 183 provided to back plate 108. Accordingly, the production, installation, etc. of display device 100 can be facilitated, the deformation of display device 100 and the like can be suppressed.

In the display device, each of the vertically extending bulging sections may have a width larger than a width of each of the mounting sections. The back plate may have reinforcement bulging sections each of which is provided on a side of each of the mounting sections and extends from one end of the vertically extending bulging section to position beyond the one end of the mounting section.

Note that the length of vertically extending bulging section 182 in the X-axis direction (the longer side direction of back plate 108) is one example of the width of the vertically extending bulging section. Reinforcement bulging section 185 is one example of the reinforcement bulging section. The lower end of vertically extending bulging section 182 is one example of one end of the vertically extending bulging section. Substantially the intermediate position of mounting section 181 is one example of the position beyond the one end of the mounting section.

According to this configuration, in display device 100 described exemplary in the first exemplary embodiment, rigidity can be increased. In addition, the mechanical strength on mounting sections 181, in the front-back direction (the Z-axis direction), can be increased in the state in which each holding member 200 is mounted to each of mounting sections 181.

In the display device, each of the reinforcement bulging sections may have an inclined section which has a bulging height gradually decreasing toward the one end of the back plate.

Note that inclined section 186 is one example of the inclined section. The length from reference surface 184 to the bulging surface in the front-back direction (the Z-axis direction) of back plate 108 is one example of the bulging height.

According to this configuration, in display device 100 described exemplary in the first exemplary embodiment, design on the lower end part of display device 100 can be improved with the mechanical strength on mounting sections 181 being ensured.

### OTHER EXEMPLARY EMBODIMENTS

As presented above, the first exemplary embodiment has been described as an example of the technique disclosed in the present application. However, the technique in the present disclosure is not limited to the above description, and is applicable to embodiments to which modification, replacement, addition, omission, or the like is made. In addition, the constituent elements described in the first exemplary embodiment can be combined to form a new embodiment.

In view of this, other exemplary embodiments will be described below. The first exemplary embodiment describes display device 100 including a liquid crystal display panel and a direct backlight. However, display device 100 may include an organic electroluminescence (EL) display panel or other display panels.

The first exemplary embodiment has described the configuration example in which vertically extending bulging section 182 has a width larger than a width of mounting section 181. However, the present disclosure is not limited to this configuration. Vertically extending bulging section 182 may have a width smaller than a width of mounting section 181.

The first exemplary embodiment has described the configuration in which a plurality of light-emitting sources 161 is mounted to wiring board 162 as light-emitting module 106. However, wiring board 162 may be configured by a flexible printed circuit (FPC), and wiring board 162 that contains electric lines for supplying electric power to wiring board 162 may be configured by an FPC. If various boards and wiring lines are formed by an FPC, routing of wiring lines becomes easy, so that reflection sheet 105 provided to back plate 108 can be flatly attached.

The first exemplary embodiment has described the configuration example in which the bulging height of vertically extending bulging sections 182 and laterally extending bulging section 183 is set larger than the bulging height of other bulging sections (not illustrated). However, the present disclosure is not limited to this configuration. Display device 100 may have a bulging section with a bulging height larger than the height of vertically extending bulging sections 182 and laterally extending bulging section 183.

The first exemplary embodiment has described the configuration example in which reinforcement bulging section 185 is provided on one side of mounting section 181. However, the present disclosure is not limited to this configuration. Reinforcement bulging section 185 may be provided on both sides of mounting section 181.

The first exemplary embodiment has described the configuration example in which laterally extending bulging section 183 and vertically extending bulging sections 182 are connected to each other into a T shape at the ends of vertically extending bulging sections 182. However, the present disclosure is not limited to this configuration. For example, laterally extending bulging section 183 and vertically extending bulging sections 182 may intersect each other in a "+" shape (or in an "X" shape) at the intermediate portion of laterally extending bulging section 183 and the intermediate portions of vertically extending bulging sections 182.

The first exemplary embodiment has described the configuration example in which back plate 108 has two vertically extending bulging sections 182 and one laterally extending bulging section 183. However, the present disclosure is not limited to this configuration. Back plate 108 may have three or more vertically extending bulging sections 182, or two or more laterally extending bulging sections 183.

As presented above, the exemplary embodiments have been described as an example of the technique in the present disclosure. For this purpose, the accompanying drawings and the detailed description are provided.

Therefore, the components in the accompanying drawings and the detail description may include not only components essential for solving problems, but also components that are provided to illustrate the above described technique and are not essential for solving problems. Therefore, such inessential components should not be readily construed as being essential based on the fact that such inessential components are shown in the accompanying drawings or described in the detailed description.

Further, the above described embodiments have been described to exemplify the technique according to the present disclosure, and therefore, various modifications, replacements, additions, omissions, and the like may be made within the scope of the claims and an equivalent scope of the claims.

### INDUSTRIAL APPLICABILITY

The present disclosure is applicable to a display device that displays images, characters, moving images, and the like. Specifically, the present disclosure is applicable to a display device, held by a holding member, for a television, monitor display, digital signage, mobile terminal, tablet terminal, or table-type display device.

### REFERENCE MARKS IN THE DRAWINGS

100: display device
101: frame
102: front member
103: display panel
104: diffusion plate
105: reflection sheet
106: light-emitting module
108: back plate
109: back cover
140: light-emitting unit
161: light-emitting source
162: wiring board
181: mounting section
181a: upper end part
182: vertically extending bulging section
183: laterally extending bulging section
184: reference surface
185: reinforcement bulging section
186: inclined section
187: tapered section
188: inclined frame section
189: attachment fitting
200: holding member

## Claims

1. A back plate (108) for use in a display device (100) comprising a display panel (103), the back plate (108) being configurable to hold the display panel (103) of the display device (100), the back plate (108) comprising:
a plurality of mounting sections (181) disposed on a plurality of positions on a lower edge part of the back plate (108), arranged for mounting a reciprocal plurality of holding members (200) for holding the display device (100);
a plurality of vertically extending bulging sections (182) that bulge out from a reference surface (184) of the back plate (108) and each extend from the proximity of the upper ends of the plurality of mounting sections (181) to an upper edge part of the back plate (108); and
a laterally extending bulging section (183) that bulges out from the reference surface (184), extends along the upper edge part of the back plate (108), and has a length larger than a distance between adjacent vertically extending bulging sections (182).

2. A display device (100) comprising a display panel (103) and a back plate (108) as claimed in claim 1, the back plate holding the display panel.

3. The display device according to claim 2, wherein
the vertically extending bulging sections (182) have a lateral width larger than a lateral width of the corresponding mounting section (181), and
the back plate (108) has reinforcement bulging sections (185) that are provided on lateral sides of the plurality of mounting sections (181) respectively, and extend from the lower ends of the vertically extending bulging sections (182) to positions beyond the upper ends of the plurality of mounting sections (181) respectively.

4. The display device according to claim 3, wherein
the reinforcement bulging sections (185) are each provided with an inclined section (186) having a bulging height being gradually decreased toward the lower edge part of the back plate (108).

## Patentansprüche

1. Rückplatte (108) zum Verwenden in einer Anzeigevorrichtung (100), die ein Anzeigepaneel (103) umfasst, wobei die Rückplatte (108) auslegbar ist, das Anzeigepaneel (103) der Anzeigevorrichtung (100) zu halten,
wobei die Rückplatte (108) Folgendes umfasst:
eine Vielzahl von Montagebereichen (181), die in einer Vielzahl von Positionen an einem Unterkantenteil der Rückplatte (108) angeordnet und zum Montieren einer reziproken Vielzahl von Halteelementen (200) zum Halten der Anzeigevorrichtung (100) arrangiert sind;
eine Vielzahl von sich vertikal erstreckenden Wölbungsbereichen (182), die sich von einer Referenzfläche (184) der Rückplatte (108) herauswölben und jeweils von der Nähe der oberen Enden der Vielzahl von Montagebereichen (181) zu einem Oberkantenteil der Rückplatte (108) erstrecken; und
einen sich seitlich erstreckenden Wölbungsbereich (183), der sich von der Referenzfläche (184) herauswölbt, entlang dem Oberkantenteil der Rückplatte (108) erstreckt und eine Länge aufweist, die größer ist als ein Abstand zwischen benachbarten sich vertikal erstreckenden Wölbungsbereichen (182).

2. Anzeigevorrichtung (100), die ein Anzeigepaneel (103) und eine Rückplatte (108) wie in Anspruch 1 beansprucht umfasst, wobei die Rückplatte das Anzeigepaneel hält.

3. Anzeigevorrichtung nach Anspruch 2, wobei die sich vertikal erstreckenden Wölbungsbereiche (182) eine seitliche Breite aufweisen, die größer ist als eine seitliche Breite des entsprechenden Montagebereichs (181), und
die Rückplatte (108) Verstärkungswölbungsbereiche (185) aufweist, die jeweils auf seitlichen Seiten der Vielzahl von Montagebereichen (181) bereitgestellt sind und sich jeweils von den unteren Enden der sich vertikal erstreckenden Wölbungsbereiche (182) zu Positionen jenseits der oberen Enden der Vielzahl von Montagebereichen (181) erstrecken.

4. Anzeigevorrichtung nach Anspruch 3, wobei
die Verstärkungswölbungsbereiche (185) jeweils mit einem geneigten Bereich (186) versehen sind, der eine Wölbungshöhe aufweist, die sich zum Unterkantenteil der Rückplatte (108) allmählich verringert.

## Revendications

1. Plaque arrière (108) destinée à être utilisée dans un dispositif d'affichage (100) comprenant un panneau d'affichage (103), la plaque arrière (108) pouvant être configurée pour maintenir le panneau d'affichage (103) du dispositif d'affichage (100),
la plaque arrière (108) comprenant :
une pluralité de sections de montage (181) disposées dans une pluralité de positions sur une partie de bord inférieure de la plaque arrière (108), agencée pour monter une pluralité réciproque d'éléments de support (200) pour supporter le dispositif d'affichage (100) ;
une pluralité de sections de renflement (182) s'étendant verticalement qui se renflent à partir d'une surface de référence (184) de la plaque arrière (108) et s'étendent chacune à partir de la proximité des extrémités supérieures de la pluralité de sections de montage (181) jusqu'à une partie de bord supérieure de la plaque arrière (108) ; et
une section de renflement (183) s'étendant latéralement qui se renfle à partir de la surface de référence (184), s'étend le long de la partie de bord supérieure de la plaque arrière (108), et a une longueur supérieure à une distance entre les sections de renflement (182) adjacentes s'étendant verticalement.

2. Dispositif d'affichage (100) comprenant un panneau d'affichage (103) et une plaque arrière (108) selon la revendication 1, la plaque arrière supportant le panneau d'affichage.

3. Dispositif d'affichage selon la revendication 2, dans lequel :
les sections de renflement (182) s'étendant verticalement ont une largeur latérale supérieure à une largeur latérale de la section de montage (181) correspondante, et
la plaque arrière (108) a des sections de renflement de renforcement (185) qui sont prévues sur les côtés latéraux de la pluralité de sections de montage (181) respectivement, et s'étendent à partir des extrémités inférieures des sections de renflement (182) s'étendant verticalement jusqu'aux positions au-delà des extrémités supérieures de la pluralité de sections de montage (181) respectivement.

4. Dispositif d'affichage selon la revendication 3, dans lequel :
les sections de renflement de renforcement (185) sont chacune prévues avec une section inclinée (186) ayant une hauteur de renflement qui est progressivement diminuée vers la partie de bord inférieure de la plaque arrière (108).
